(19) **Europäisches Patentamt / European Patent Office / Office européen des brevets**

(11) **EP 3 076 723 A1**

(12) ## EUROPEAN PATENT APPLICATION
published in accordance with Art. 153(4) EPC

(43) Date of publication:
**05.10.2016 Bulletin 2016/40**

(21) Application number: **13900519.3**

(22) Date of filing: **24.12.2013**

(51) Int Cl.:
***H04W 52/04*** (2009.01)

(86) International application number:
**PCT/CN2013/090372**

(87) International publication number:
**WO 2015/096047 (02.07.2015 Gazette 2015/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.
Longgang District
Shenzhen, Guangdong 518129 (CN)**

(72) Inventors:
• **WANG, Fan
  Shenzhen
  Guangdong 518129 (CN)**
• **MA, Xueli
  Shenzhen
  Guangdong 518129 (CN)**

(74) Representative: **Gill Jennings & Every LLP
The Broadgate Tower
20 Primrose Street
London EC2A 2ES (GB)**

(54) **METHOD FOR UPLINK SCHEDULING, USER EQUIPMENT AND BASE STATION**

(57) Embodiments of the present invention disclose an uplink scheduling method, user equipment, and a base station. The method includes the following steps: receiving, by user equipment UE, uplink grant signaling, where the uplink grant signaling includes a first power ratio, and the first power ratio is a power ratio, adapted to a current transport channel, of an enhanced dedicated physical data channel (E-DPDCH) and a dedicated physical control channel (DPCCH) (101); and adjusting an E-DPDCH power and a DPCCH power according to the first power ratio, so that a power ratio of the E-DPDCH and the DPCCH after adjustment satisfies the first power ratio, and an uplink transmit power after adjustment is the same as an uplink transmit power before adjustment (102). In the present invention, when a network side resends an enhanced absolute grant channel (E-AGCH) to change a power ratio of an E-DPDCH and a DPCCH, an uplink transmit power does not change, which ensures stable rise over thermal noise (RoT), and ensures an uplink throughput and a coverage index of a communications system.

UE receives uplink grant signaling, where the uplink grant signaling includes a first power ratio, and the first power ratio is a power ratio, adapted to a current transport channel, of an E-DPDCH and a DPCCH — 101

The UE adjusts an E-DPDCH power and a DPCCH power according to the first power ratio, so that a power ratio of the E-DPDCH and the DPCCH after adjustment satisfies the first power ratio, and an uplink transmit power after adjustment is the same as an uplink transmit power before adjustment — 102

FIG. 1

**Description**

**TECHNICAL FIELD**

The present invention relates to the communications field, and in particular, to an uplink scheduling method, user equipment, and a base station.

**BACKGROUND**

In a mainstream 3G wireless communications standard Universal Mobile Telecommunications System (Universal Mobile Telecommunications System, UMTS for short) formulated by the 3rd Generation Partnership Project (3rd Generation Partnership Project, 3GPP for short), to satisfy an increasingly high user requirement on a rate, a high-speed packet access (High-Speed Packet Access, HSPA for short) technology is introduced, including a High Speed Downlink Packet Access (High Speed Downlink Packet Access, HSDPA for short) technology introduced in a Release 5 and a High Speed Uplink Packet Access (High Speed Downlink Packet Access, HSUPA for short) introduced in a Release 6, which is mainly to provide a higher data rate, a low latency, and a higher system capacity.

In uplink scheduling of the HSUPA technology, a base station (NodeB, NB for short) controls, based on an instantaneous interference level by means of a scheduling grant, a maximum dedicated physical data channel-to-pilot (E-DCH Dedicated Physical Data Channel, E-DPDCH-to-pilot for short) power ratio that can be used by user equipment (User Equipment, UE for short), to control an E-DPDCH power of each UE to keep an interference level of an entire cell. A scheduler of the HSUPA is located in the NB, and data buffers are distributed in different UEs. A scheduling framework of the HSUPA is based on a scheduling grant channel sent by the scheduler, and the scheduling grant channel includes an E-DCH absolute grant channel (E-DCH Absolute Grant Channel, E-AGCH for short) and an E-DCH relative grant channel (E-DCH Relative Grant Channel, E-RGCH for short), where the E-AGCH can support absolute adjustment of an E-DPDCH-to-pilot power ratio, and the E-RGCH supports relative adjustment of the power ratio.

For the uplink scheduling in the HSUPA technology, an uplink rate adaptive technology put forward by 3GPP Release 12 uses two loops to control an uplink transmit power and a transmission-block size (transmission-block size, TBS for short), where one loop sends transmit power control (Transmit Power Control, TPC for short) signaling to instruct to control a change of a transmit power of a dedicated physical control channel (Dedicated Physical Control Channel, DPCCH for short), to control a received signal-to-noise ratio (Signal-to-Noise Ratio, SNR for short) of the DPCCH. With the TPC signaling, UP and DOWN are sent to enable the received SNR of the DPCCH to satisfy an SNR target value set by a network side. When the UE receives the TPC signaling, the UE adjusts the transmit power of the DPCCH according to the instruction of the TPC signaling.

The other loop sends a signal to interference plus noise ratio difference (SINR different, SD for short), that is, a difference between a signal to interference plus noise ratio (Signal to Interference plus Noise Ratio, SINR for short) of an actual channel and a service grant to the UE by using an stand-alone dedicated control channel (Stand-Alone Dedicated Control Channel, SDCCH for short). The network side notifies an initial E-AGCH only once; the UE acquires an initial SG and a power ratio of the E-DPDCH and the DPCCH by using the initial E-AGCH, and acquires the SD by using the SDCCH, and the UE then performs enhanced transport format combination (Enhanced Transport Format Combination, E-TFC for short) selection according to the initial SG, the power ratio of the E-DPDCH and the DPCCH, and the SD, and calculates to acquire and implement an actual TBS that can be better adapted to the channel. The SDCCH sends the SD to the UE at a transmission time interval (Transmission Time Interval, TTI for short) level, and the UE performs E-TFC selection at the TTI level.

In the foregoing uplink scheduling process, the prior art has at least the following disadvantages: When the network side sends the E-AGCH to adjust the power ratio of the E-DPDCH and the DPCCH, rise over thermal noise (Rise over Thermal noise, RoT for short) of a receive end fluctuates, which affects an uplink throughput and a coverage index of a communications system.

**SUMMARY**

Embodiments of the present invention provide an uplink scheduling method, user equipment, and a base station, so that when UE adjusts a power ratio of an E-DPDCH and a DPCCH according to an E-AGCH, an uplink power does not change, which stabilizes RoT of a receive end, and ensures an uplink throughput and a coverage index of a communications system.

To achieve the foregoing objective, the following technical solutions are used in the embodiments of the present invention:

According to a first aspect, an uplink scheduling method includes:

receiving, by UE, uplink grant signaling, where the uplink grant signaling includes a first power ratio, and the first power ratio is a power ratio, adapted to a current transport channel, of an E-DPDCH and a DPCCH; and adjusting an E-DPDCH power and a DPCCH power according to the first power ratio, so that a power ratio of the E-DPDCH and the DPCCH after adjustment satisfies the first power ratio, and an uplink transmit power after adjustment is the same as an uplink transmit power before adjustment.

With reference to the first aspect, in a first possible implementation manner of the first aspect, the uplink transmit power before adjustment is an uplink transmit power at any time before power adjustment.

With reference to the first aspect or the first possible implementation manner of the first aspect, in a second possible implementation manner of the first aspect, the uplink grant signaling includes:

E-AGCH signaling or E-RGCH signaling.

With reference to the first aspect or the first possible implementation manner of the first aspect or the second possible implementation manner of the first aspect, in a third possible implementation manner of the first aspect, the uplink transmit power includes:

a sum of the E-DPDCH power and the DPCCH power, or
a sum of the E-DPDCH power, the DPCCH power, and an enhanced dedicated physical control channel (Enhanced Dedicated Physical Control Channel, E-DPCCH for short) E-DPCCH power; or
a sum of the E-DPDCH power, the DPCCH power, the E-DPCCH power and a high speed dedicated physical control channel (High Speed Dedicated Physical Control Channel, HS-DPCCH for short) HS-DPCCH power.

With reference to the first aspect or the first possible implementation manner of the first aspect to the third possible implementation manner of the first aspect, in a fourth possible implementation manner of the first aspect, before the adjusting an E-DPDCH power and a DPCCH power according to the first power ratio, the method further includes:

receiving preset network configuration signaling sent by a base station, where the preset network configuration signaling includes first indication information, and the first indication information is used to instruct the UE whether to modify the DPCCH power during power adjustment according to the first power ratio.

With reference to the fourth possible implementation manner of the first aspect, in a fifth possible implementation manner of the first aspect, the preset network configuration signaling is higher layer signaling or physical layer signaling.

With reference to the fourth possible implementation manner of the first aspect or the fifth possible implementation manner of the first aspect, in a sixth possible implementation manner of the first aspect, if the first indication information instructs to modify the DPCCH power, the adjusting an E-DPDCH power and a DPCCH power according to the first power ratio is executed, so that the power ratio of the E-DPDCH and the DPCCH after adjustment satisfies the first power ratio, and the uplink transmit power after adjustment is the same as the uplink transmit power before adjustment; or
if the first indication information instructs not to modify the DPCCH power, the E-DPDCH power is adjusted according to the first power ratio, so that the power ratio of the E-DPDCH and the DPCCH after adjustment satisfies the first power ratio.

With reference to the first aspect or the first possible implementation manner of the first aspect to the sixth possible implementation manner of the first aspect, in a seventh possible implementation manner of the first aspect, the method further includes:

performing E-TFC selection according to the first power ratio and a preset correspondence, where the preset correspondence includes at least one TBS and a power ratio that is in one-to-one correspondence to the TBS.

With reference to the first aspect or the first possible implementation manner of the first aspect to the sixth possible implementation manner of the first aspect, in an eighth possible implementation manner of the first aspect, the method further includes:

performing E-TFC selection according to the first power ratio, difference information notified by the base station, and a preset correspondence, where the preset correspondence includes at least one TBS and a power ratio that is in one-to-one correspondence to the TBS.

According to a second aspect, user equipment is provided, including:

a receiving unit, configured to receive uplink grant signaling, where the uplink grant signaling includes a first power ratio, and the first power ratio is a power ratio, adapted to a current transport channel, of an E-DPDCH and a DPCCH; and

an adjustment unit, configured to adjust an E-DPDCH power and a DPCCH power according to the first power ratio received by the receiving unit, so that a power ratio of the E-DPDCH and the DPCCH after adjustment satisfies the first power ratio, and an uplink transmit power after adjustment is the same as an uplink transmit power before adjustment.

With reference to the second aspect, in a first possible implementation manner of the second aspect, the uplink transmit power before adjustment is an uplink transmit power at any time before power adjustment.

With reference to the second aspect or the first possible implementation manner of the second aspect, in a second possible implementation manner of the second aspect, the uplink grant signaling includes:

E-AGCH signaling or E-RGCH signaling.

With reference to the second aspect or the first possible implementation manner of the second aspect or the second possible implementation manner of the second aspect, in a third possible implementation manner of the second aspect, the uplink transmit power includes:

a sum of the E-DPDCH power and the DPCCH power, or
a sum of the E-DPDCH power, the DPCCH power, and an E-DPCCH power; or
a sum of the E-DPDCH power, the DPCCH power, the E-DPCCH power and an HS-DPCCH power.

With reference to the second aspect or the first possible implementation manner of the second aspect to the third possible implementation manner of the second aspect, in a fourth possible implementation manner of the second aspect, the receiving unit is further configured to receive preset network configuration signaling sent by a base station, where the preset network configuration signaling includes first indication information, and the first indication information is used to instruct the UE whether to modify the DPCCH power during power adjustment according to the first power ratio.

With reference to the fourth possible implementation manner of the second aspect, in a fifth possible implementation manner of the second aspect, the preset network configuration signaling is higher layer signaling or physical layer signaling.

With reference to the fourth possible implementation manner of the second aspect or the fifth possible implementation manner of the second aspect, in a sixth possible implementation manner of the second aspect, the adjustment unit is specifically configured to:

if the first indication information received by the receiving unit instructs to modify the DPCCH power, execute the adjusting an E-DPDCH power and a DPCCH power according to the first power ratio, so that the power ratio of the E-DPDCH and the DPCCH after adjustment satisfies the first power ratio, and the uplink transmit power after adjustment is the same as the uplink transmit power before adjustment; or
if the first indication information received by the receiving unit instructs not to modify the DPCCH power, adjust the E-DPDCH power according to the first power ratio, so that the power ratio of the E-DPDCH and the DPCCH after adjustment satisfies the first power ratio.

With reference to the second aspect or the first possible implementation manner of the second aspect to the sixth possible implementation manner of the second aspect, in a seventh possible implementation manner of the second aspect, the adjustment unit is further configured to:

perform E-TFC selection according to the first power ratio and a preset correspondence, where the preset correspondence includes at least one TBS and a power ratio that is in one-to-one correspondence to the TBS.

With reference to the second aspect or the first possible implementation manner of the second aspect to the sixth possible implementation manner of the second aspect, in an eighth possible implementation manner of the second aspect, the adjustment unit is further configured to:

perform E-TFC selection according to the first power ratio, difference information notified by the base station, and a preset correspondence, where the preset correspondence includes at least one TBS and a power ratio that is in one-to-one correspondence to the TBS.

According to a third aspect, an uplink scheduling method is provided, including:

sending preset network configuration signaling, where the preset network configuration signaling includes first indication information, and the first indication information is used to instruct user equipment UE whether to modify a DPCCH power during power adjustment according to uplink grant signaling.

With reference to the third aspect, in a first possible implementation manner of the third aspect, the preset network configuration signaling is higher layer signaling or physical layer signaling.

According to a fourth aspect, a base station is provided, including:

a sending unit, configured to send preset network configuration signaling, where the preset network configuration signaling includes first indication information, and the first indication information is used to instruct user equipment UE whether to modify a DPCCH power during power adjustment according to uplink grant signaling.

With reference to the fourth aspect, in a first possible implementation manner of the fourth aspect, the preset network configuration signaling is higher layer signaling or physical layer signaling.

According to a fifth aspect, user equipment is provided, including a receiver and a processor, where the receiver is configured to receive uplink grant signaling, where the uplink grant signaling includes a first power ratio, and the first power ratio is a power ratio, adapted to a current transport channel, of an E-DPDCH and a DPCCH; and the processor is configured to adjust an E-DPDCH power and a DPCCH power according to the first power ratio received by the receiver, so that a power ratio of the E-DPDCH and the DPCCH after adjustment satisfies the first power ratio, and an uplink transmit power after adjustment is the same as an uplink transmit power before adjustment.

With reference to the fifth aspect, in a first possible implementation manner of the fifth aspect, the uplink transmit power before adjustment is an uplink transmit power at any time before power adjustment.

With reference to the fifth aspect or the first possible implementation manner of the fifth aspect, in a second possible implementation manner of the fifth aspect, the uplink grant signaling includes:

E-AGCH signaling or E-RGCH signaling.

With reference to the fifth aspect or the first possible implementation manner of the fifth aspect or the second possible implementation manner of the fifth aspect, in a third possible implementation manner of the fifth aspect, the uplink transmit power includes:

a sum of the E-DPDCH power and the DPCCH power, or
a sum of the E-DPDCH power, the DPCCH power, and an enhanced dedicated physical control channel E-DPCCH power; or
a sum of the E-DPDCH power, the DPCCH power, the E-DPCCH power and an HS-DPCCH power.

With reference to the fifth aspect or the first possible implementation manner of the fifth aspect to the third possible implementation manner of the fifth aspect, in a fourth possible implementation manner of the fifth aspect, the receiver is further configured to receive preset network configuration signaling sent by a base station, where the preset network configuration signaling includes first indication information, and the first indication information is used to instruct the UE whether to modify the DPCCH power during power adjustment according to the first power ratio.

With reference to the fourth possible implementation manner of the fifth aspect, in a fifth possible implementation manner of the fifth aspect, the preset network configuration signaling is higher layer signaling or physical layer signaling.

With reference to the fourth possible implementation manner of the fifth aspect or the fifth possible implementation manner of the fifth aspect, in a sixth possible implementation manner of the fifth aspect, the processor is specifically configured to:

if the first indication information received by the receiver instructs to modify the DPCCH power, execute the adjusting an E-DPDCH power and a DPCCH power according to the first power ratio, so that the power ratio of the E-DPDCH and the DPCCH after adjustment satisfies the first power ratio, and the uplink transmit power after adjustment is the same as the uplink transmit power before adjustment; or

if the first indication information received by the receiver instructs not to modify the DPCCH power, adjust the E-DPDCH power according to the first power ratio, so that the power ratio of the E-DPDCH and the DPCCH after adjustment satisfies the first power ratio.

With reference to the fifth aspect or the first possible implementation manner of the fifth aspect to the sixth possible implementation manner of the fifth aspect, in a seventh possible implementation manner of the fifth aspect, the processor is further configured to:

perform E-TFC selection according to the first power ratio and a preset correspondence, where the preset correspondence includes at least one TBS and a power ratio that is in one-to-one correspondence to the TBS.

With reference to the fifth aspect or the first possible implementation manner of the fifth aspect to the sixth possible implementation manner of the fifth aspect, in an eighth possible implementation manner of the fifth aspect, the processor is further configured to:

perform E-TFC selection according to the first power ratio, difference information notified by the base station, and a preset correspondence, where the preset correspondence includes at least one TBS and a power ratio that is in one-to-one correspondence to the TBS.

According to a sixth aspect, a base station is provided, including:

a transmitter, configured to send preset network configuration signaling, where the preset network configuration signaling includes first indication information, and the first indication information is used to instruct user equipment UE whether to modify a DPCCH power during power adjustment according to uplink grant signaling.

With reference to the sixth aspect, in a first possible implementation manner of the sixth aspect, the preset network configuration signaling is higher layer signaling or physical layer signaling.

In the uplink scheduling method, the user equipment, and the base station provided in the embodiments of the present invention, uplink grant signaling is received, where the uplink grant signaling includes a first power ratio, and the first power ratio is a power ratio, adapted to a current transport channel, of an E-DPDCH and a DPCCH; and an E-DPDCH power and a DPCCH power are adjusted according to the first power ratio, so that a power ratio of the E-DPDCH and the DPCCH after adjustment satisfies the first power ratio, and an uplink transmit power after adjustment is the same as an uplink transmit power before adjustment. In this way, when UE adjusts a power ratio of an E-DPDCH and a DPCCH according to an E-AGCH, an uplink transmit power does not change, which ensures stable RoT of a receive end, ensures an uplink throughput and a coverage index of a communications system, and resolves a prior-art defect that when UE adjusts a power ratio of an E-DPDCH and a DPCCH according to an E-AGCH, only an E-DPDCH power is adjusted and an uplink transmit power changes, causing RoT fluctuation of a receive end, and affecting an uplink throughput and a coverage index of a communications system.

**BRIEF DESCRIPTION OF DRAWINGS**

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic flowchart of an uplink scheduling method according to an embodiment of the present invention;
FIG. 2 is a schematic flowchart of another uplink scheduling method according to an embodiment of the present invention;
FIG. 3 is a schematic flowchart of still another uplink scheduling method according to an embodiment of the present invention;
FIG. 4 is a schematic diagram of an apparatus structure of user equipment according to an embodiment of the present invention;
FIG. 5 is a schematic diagram of an apparatus structure of a base station according to an embodiment of the present invention;
FIG. 6 is a schematic diagram of an apparatus structure of another user equipment according to an embodiment of the present invention; and
FIG. 7 is a schematic diagram of an apparatus structure of another base station according to an embodiment of the present invention.

**DESCRIPTION OF EMBODIMENTS**

The following clearly describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The technical solutions provided in embodiments of the present invention may be applied to various wireless communications networks, such as a Global System for Mobile Communications (global system for mobile communication, GSM for short) system, a Code Division Multiple Access (code division multiple access, CDMA for short) system, a Wideband Code Division Multiple Access (wideband code division multiple access, WCDMA for short) system, a Universal Mobile Telecommunications System (universal mobile telecommunication system, UMTS for short), a general packet radio service (general packet radio service, GPRS for short) system, a Long Term Evolution (long term evolution, LTE for short) system, Long Term Evolution Advanced (long term evolution advanced, LTE-A for short) system, and a Worldwide Interoperability for Microwave Access (worldwide interoperability for microwave access, WiMAX for short) system. The terms "network" and "system" can be interchanged with each other.

In the embodiments of the present invention, a base station (base station, BS) may be a device in communication with user equipment (user equipment, UE for short) or another communication station such as a relay station, and may provide communication coverage in a specific physical area. For example, the base station may be specifically a base transceiver station (Base Transceiver Station, BTS for short) or a base station controller (Base Station Controller, BSC for short) in GSM or CDMA; or may be a node B (Node B, NB for short) in UMTS or a radio network controller (Radio Network Controller, RNC for short) in UMTS; or may be further an evolved NodeB (Evolutional Node B, ENB or eNodeB for short) in LTE; or may be another access network device providing an access service in a wireless communications network, which is not limited in the present invention.

**Embodiment 1**

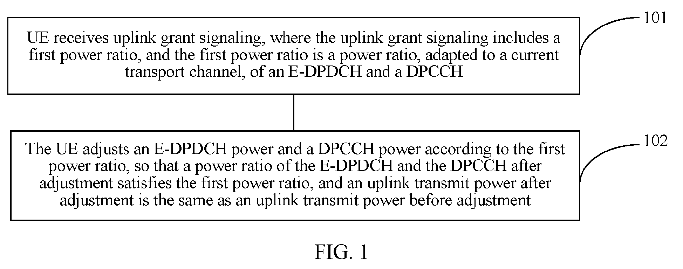

Embodiment 1 of the present invention provides an uplink scheduling method. Referring to FIG. 1, the method may include:

101: UE receives uplink grant signaling, where the uplink grant signaling includes a first power ratio, and the first power ratio is a power ratio, adapted to a current transport channel, of an E-DPDCH and a DPCCH.

The uplink grant signaling is sent by a base station, and used to instruct the UE to adjust a power. The uplink grant signaling may include E-AGCH signaling or E-RGCH signaling.

When an actual block error ratio (Block Error Ratio, BLER for short), received by the base station, of the E-DPDCH does not satisfy a BLER target value preset by a network side, the base station can accordingly determine that an actual SINR of current data cannot meet a requirement of an E-TFC corresponding to a current power ratio of the E-DPDCH and the DPCCH, and the power ratio of the E-DPDCH and the DPCCH needs to be adjusted to change a signal to noise ratio (Signal to Noise Ratio, SNR for short) value of the DPCCH, that is, an E-AGCH needs to be sent to adjust the power ratio of the E-DPDCH and the DPCCH, so that the E-TFC corresponding to a power ratio of the E-DPDCH and the DPCCH after adjustment can satisfy the BLER target value preset by the network side.

It is assumed that, a power ratio of the E-DPDCH and the DPCCH of the UE is SG0 at a T0 moment, an E-DPDCH power is $P_{E-DPDCH}$, and a DPCCH power is $P_{DPCCH}$. In this case, the base station determines, according to received data and a service grant, that the power ratio of the E-DPDCH and the DPCCH needs to be adjusted from SG0 to SG1 so as to adapt to a channel, and sends new E-AGCH signaling to the UE, where the first power ratio included in the new E-AGCH signaling is SG1.

102: The UE adjusts an E-DPDCH power and a DPCCH power according to the first power ratio, so that a power ratio of the E-DPDCH and the DPCCH after adjustment satisfies the first power ratio, and an uplink transmit power after adjustment is the same as an uplink transmit power before adjustment.

The uplink transmit power before adjustment is an uplink transmit power at any time before power adjustment.

Optionally, the uplink transmit power before adjustment is an uplink transmit power within a first TTI or slot before power adjustment.

Optionally, the uplink transmit power may include: a sum of the E-DPDCH power and the DPCCH power, or a sum of the E-DPDCH power, the DPCCH power, and an E-DPCCH power; or a sum of the E-DPDCH power, the DPCCH power, the E-DPCCH power, and an HS-DPCCH power.

It should be noted that, because of different content included in the uplink transmit power, processes of adjusting, by the UE, an E-DPDCH power and a DPCCH power according to the first power ratio, so that a power ratio of the E-DPDCH and the DPCCH after adjustment satisfies the first power ratio, and an uplink transmit power after adjustment is the same as an uplink transmit power before adjustment are also different.

The following describes, by using specific examples, specific processes, implemented when the uplink transmit power includes different content, of adjusting, by the UE, an E-DPDCH power and a DPCCH power according to the first power ratio, so that a power ratio of the E-DPDCH and the DPCCH after adjustment satisfies the first power ratio, and an uplink transmit power after adjustment is the same as an uplink transmit power before adjustment.

It is assumed that the new E-AGCH signaling takes effect at a T1 moment. The UE receives the new E-AGCH signaling and adjusts the E-DPDCH power and the DPCCH power according to SG1 included in the new E-AGCH signaling, where there are the following three methods for calculating an E-DPDCH power after adjustment and a DPCCH power after adjustment according to the uplink transmit power:

First manner: When the uplink transmit power is a sum of the E-DPDCH power and the DPCCH power, channel powers after adjustment may be calculated according to the following three expressions:

$$P'_{E-DPDCH} + P'_{DPCCH} = P_{E-DPDCH} + P_{DPCCH}$$, where $P_{E-DPDCH}$ is an E-DPDCH power before adjustment, $P'_{E-DPDCH}$ is an E-DPDCH power after adjustment, $P_{DPCCH}$ is a DPCCH power before adjustment, and $PD_{PCCH}$ is a DPCCH power after adjustment;

$$P'_{E-DPDCH} / P'_{DPCCH} = SG1;$$

and

$$P_{E-DPDCH} / P_{DPCCH} = SG0;$$

for example, calculation may be performed by solving an equation according to the foregoing three expressions, to obtain the channel powers after adjustment, which are:

$$P'_{DPCCH} = P_{DPCCH} (1+SG_0)/(1+SG_1);$$

and

$$P'_{E-DPDCH} = SG_1 \times P'_{DPCCH}$$

Second manner: When the uplink transmit power is a sum of the E-DPDCH power, the DPCCH power, and the E-DPCCH power, channel powers after adjustment may be calculated according to the following four expressions:

$$P'_{E-DPDCH} + P'_{DPCCH} + P'_{E-DPCCH} = P_{E-DPDCH} + P_{DPCCH} + P_{E-DPCCH},$$

where $P_{E-DPCCH}$ is an E-DPCCH power before adjustment, and $P'_{E-DPCCH}$ is an E-DPCCH power after adjustment;

$$P'_{E-DPDCH} / P'_{DPCCH} = SG1;$$

$$P_{E-DPDCH} / P_{DPCCH} = SG0; \text{ and}$$

$$P'_{E-DPCCH} / P'_{DPCCH} = P_{E-DPCCH} / P_{DPCCH} = Q^2 ,$$

where Q is an amplitude ratio of the E-DPCCH and the DPCCH, the power ratio is equal to the square of the amplitude ratio, and because $Q$ changes slowly, it can be considered that $Q$ is consistent before and after adjustment;

for example, calculation may be performed by solving an equation according to the foregoing four expressions, to obtain the channel powers after adjustment, which are:

$$P'_{DPCCH} = P_{DPCCH} (1 + Q^2 + SG0)/(1 + Q^2 + SG1)$$

$$P'_{E-DPDCH} = SG1 \times P'_{DPCCH} ; \text{ and}$$

$$P'_{E-DPCCH} = Q^2 \times P'_{DPCCH}$$

Third manner: When the uplink transmit power is a sum of the E-DPDCH power, the DPCCH power, the E-DPCCH power, and the HS-DPCCH power, channel powers after adjustment may be calculated according to the following five expressions:

$$P'_{E-DPDCH} + P'_{DPCCH} + P'_{E-DPCCH} + P'_{HS-DPCCH} = P_{E-DPDCH} + P_{DPCCH} + P_{E-DPCCH} + P_{HS-DPCCH} ,$$

where $P_{HS-DPCCH}$ is an HS-DPCCH power before adjustment, and $P'_{HS-DPCCH}$ is an HS-DPCCH power after adjustment;

$$P'_{E-DPDCH} / P'_{DPCCH} = SG1;$$

$$P_{E-DPDCH} / P_{DPCCH} = SG0;$$

$$P'_{E-DPCCH} / P'_{DPCCH} = P_{E-DPCCH} / P_{DPCCH} = Q^2 ;$$

and $P'_{HS-DPCCH} / P'_{DPCCH} = P_{HS-DPCCH} / P_{DPCCH} = E^2$ , where $E$ is an amplitude ratio of an HS-DPCCH and the DPCCH, the power ratio is equal to the square of the amplitude ratio, and because $E$ changes slowly, it can be considered that $E$ is consistent before and after adjustment;

for example, calculation may be performed by solving an equation according to the foregoing five expressions, to obtain the channel powers after adjustment, which are:

$$P'_{DPCCH} = P_{DPCCH} (1 + Q^2 + E^2 + SG0)/(1 + Q^2 + E^2 + SG1)$$

$$P'_{E-DPDCH} = SG1 \times P'_{DPCCH} ;$$

$$P'_{E-DPCCH} = Q^2 \times P'_{DPCCH} ;$$

and

$$P'_{HS-DPCCH} = E^2 \times P'_{DPCCH}$$

Further, the method may further include:

receiving preset network configuration signaling sent by a base station, where the preset network configuration signaling may include first indication information, and the first indication information is used to instruct the UE whether to modify the DPCCH power during power adjustment according to the first power ratio.

If the first indication information instructs to modify the DPCCH power, step 102 is performed; or if the first indication information instructs not to modify the DPCCH power, the E-DPDCH power is adjusted according to the first power ratio, so that the power ratio of the E-DPDCH and the DPCCH after adjustment satisfies the first power ratio.
The preset network configuration signaling may be higher layer signaling or physical layer signaling. When the preset network configuration signaling has different types, forms of the first indication information included in the preset network configuration signaling are also different, and manners for different forms of first indication information to instruct whether to modify the DPCCH power are also different, which may specifically include:

When the preset network configuration signaling is the physical layer signaling, the first indication information may be one bit in the physical layer signaling, for example, a manner in which joint coding is performed for information about the power ratio of the E-DPDCH and the DPCCH may be used to multiplex a scope bit in E-AGCH bits; or the first indication information may be an independent physical channel or independent physical signaling, for example, may be a high speed shared control channel (High Speed Shared Control Channel, HS-SCCH for short) order, and in this case, the first indication information directly instructs whether to modify the DPCCH power. A specific form when the first indication information is the physical layer signaling is not limited in the present invention. When the preset network configuration signaling is the higher layer signaling, the first indication information may be a configuration mode, different configuration modes correspond to whether the DPCCH power is to be modified, and the UE determines, according to the different configuration modes, whether to modify the DPCCH power; or the first indication information is a configured first parameter, for example, whether the first parameter satisfies a preset condition is respectively used to instruct whether to modify the DPCCH power, where the preset condition may be set according to an actual requirement, which is not limited in the present invention.

Certainly, the first indication information may also be in another form, the form of the first indication information does not affect an objective of the present invention, and the form of the first indication information is not limited in the present invention.
Optionally, the method may further include:

performing E-TFC selection according to the first power ratio and a preset correspondence, where the preset correspondence includes at least one TBS and a power ratio that is in one-to-one correspondence to the TBS.

Refer to Table 1, which shows a preset correspondence. It should be noted that Table 1 merely uses a table form to exemplarily describe a form of the preset correspondence. Certainly, the preset correspondence may also be in another form, which is not limited in the present invention.

**Table 1**

| Power ratio | TBS |
| --- | --- |
| X | a |
| Y | b |
| ...... | ...... |

Optionally, the method may further include: performing E-TFC selection according to the first power ratio, difference information notified by the base station, and a preset correspondence, where the preset correspondence includes at least one TBS and a power ratio that is in one-to-one correspondence to the TBS.
It should be noted that, for E-TFC selection in the uplink scheduling, the E-TFC selection may be performed according to the first power ratio and the preset correspondence, or the E-TFC selection may be performed according to the first power ratio, the difference information notified by the base station, and the preset correspondence. A specific method for performing the E-TFC selection may be selected according to an actual requirement, which is not limited in the present invention.

Compared with that the E-TFC selection is performed according to the first power ratio, the difference information notified by the base station, and the preset correspondence, when the E-TFC selection is performed according to the first power ratio and the preset correspondence, signaling does not need to be sent at a TTI level, downlink signaling overheads are reduced, and a downlink throughput of a system is ensured.

In the uplink scheduling method provided in this embodiment of the present invention, uplink grant signaling is received, where the uplink grant signaling includes a first power ratio, and the first power ratio is a power ratio, adapted to a current transport channel, of an E-DPDCH and a DPCCH; and an E-DPDCH power and a DPCCH power are adjusted according to the first power ratio, so that a power ratio of the E-DPDCH and the DPCCH after adjustment satisfies the first power ratio, and an uplink transmit power after adjustment is the same as an uplink transmit power before adjustment. In this way, when UE adjusts a power ratio of an E-DPDCH and a DPCCH according to an E-AGCH, an uplink transmit power does not change, which ensures stable RoT of a receive end, ensures an uplink throughput and a coverage index of a communications system, and resolves a prior-art defect that when UE adjusts a power ratio of an E-DPDCH and a DPCCH according to an E-AGCH, only an E-DPDCH power is adjusted and an uplink transmit power changes, causing RoT fluctuation of a receive end, and affecting an uplink throughput and a coverage index of a communications system.

**Embodiment 2**

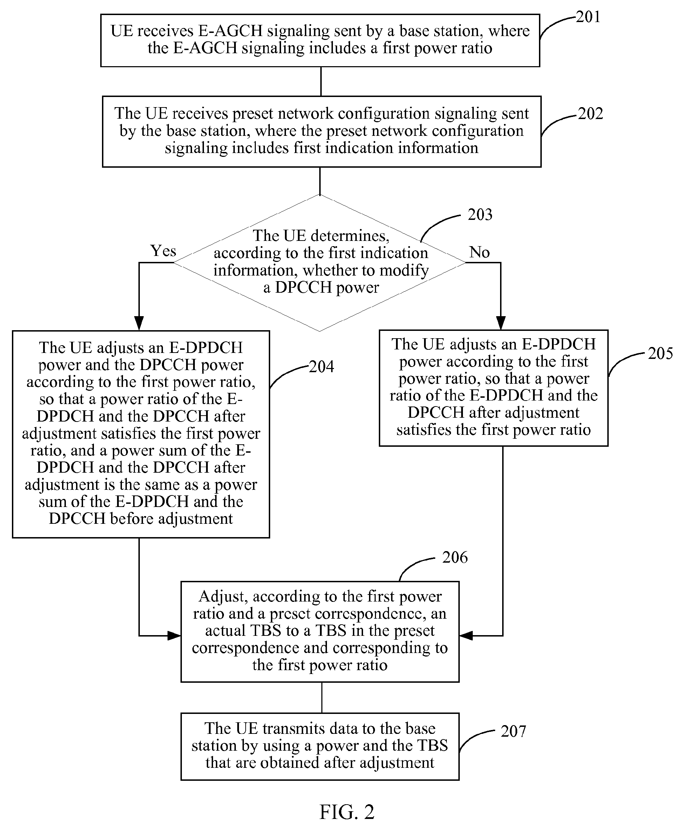

Embodiment 2 of the present invention provides another uplink scheduling method. Referring to FIG. 2, the method may include:

201: UE receives E-AGCH signaling sent by a base station, where the E-AGCH signaling includes a first power ratio.

The first power ratio is a power ratio, adapted to a current transport channel, of an E-DPDCH and a DPCCH.

For example, a current power ratio of the E-DPDCH and the DPCCH of the UE is 9, a power sum of the E-DPDCH and the DPCCH is 100, and in this case, the UE receives the E-AGCH signaling sent by the base station, which includes a power ratio 4 of the E-DPDCH and the DPCCH, that is, the base station needs to adjust the power ratio of the E-DPDCH and the DPCCH of the UE to 4.

202: The UE receives preset network configuration signaling sent by the base station, where the preset network configuration signaling includes first indication information.

For example, a system multiplexes a scope bit in E-AGCH bits as the preset network configuration signaling, and the UE receives an E-AGCH sent by the base station and uses the scope bit in the E-AGCH bits as the first indication information.

203: The UE determines, according to the first indication information, whether to modify a DPCCH power; and if yes, step 204 is performed; or if not, step 205 is performed.

It is assumed that, according to a pre-agreement, when the scope bit in the E-AGCH bits is 1, the DPCCH power is to be modified.

For example, if the scope bit in the E-AGCH bits received by the UE is 1, it is determined that the DPCCH power is to be modified.

It should be noted that, a pre-agreed correspondence between the first indication information and whether the DPCCH is to be modified may be determined according to an actual requirement, which is not limited in the present invention.

204: The UE adjusts an E-DPDCH power and the DPCCH power according to the first power ratio, so that a power ratio of the E-DPDCH and the DPCCH after adjustment satisfies the first power ratio, and a power sum of the E-DPDCH and the DPCCH after adjustment is the same as a power sum of the E-DPDCH and the DPCCH before adjustment.

For example, according to a current power ratio 9 of the E-DPDCH and the DPCCH of the UE and a power sum 100 of the E-DPDCH and the DPCCH, it can be calculated that a current E-DPDCH power is 90, and a current DPCCH power is 10.

Then a method for calculating an E-DPDCH power after adjustment and a DPCCH power after adjustment according to the power ratio 4 of the E-DPDCH and the DPCCH included in the E-AGCH signaling that is sent by the base station and that is received by the UE is as follows:

$$P'_{E-DPDCH} + P'_{DPCCH} = P_{E-DPDCH} + P_{DPCCH} = 100,$$

where $P_{E-DPDCH}$ is an E-DPDCH power before adjustment, $P'_{E-DPDCH}$ is an E-DPDCH power after adjustment, $P_{DPCCH}$ is a DPCCH power before adjustment, and $P'_{DPCCH}$ is a DPCCH power after adjustment;

$$P'_{E-DPDCH} / P'_{DPCCH} = 9;$$

and

$$P_{E-DPDCH} / P_{DPCCH} = 4;$$

for example, calculation may be performed by solving an equation according to the foregoing three expressions, to obtain the channel powers after adjustment, which are:

$$P'_{DPCCH} = P_{DPCCH} (1+9)/(1+4) = 20;$$

and

$$P'_{E-DPDCH} = 4 \times 20 = 80.$$

In this way, it is not only ensured that the power ratio of the E-DPDCH and the DPCCH after adjustment satisfies the first power ratio, and but also ensured that the power sum of the E-DPDCH and the DPCCH after adjustment is the same as the power sum of the E-DPDCH and the DPCCH before adjustment.

205: The UE adjusts an E-DPDCH power according to the first power ratio, so that a power ratio of the E-DPDCH and the DPCCH after adjustment satisfies the first power ratio.

For example, according to a current power ratio 9 of the E-DPDCH and the DPCCH of the UE and a power sum 100 of the E-DPDCH and the DPCCH, a current E-DPDCH power is 90, and a current DPCCH power is 10.
Then the E-DPDCH power is adjusted to 10×4, that is, 40, according to the first power ratio 4 included in the E-AGCH received by the UE.

206: Perform E-TFC selection according to the first power ratio and a preset correspondence.
207: The UE transmits data to the base station by using a power after adjustment and a TBS.

In the uplink scheduling method provided in this embodiment of the present invention, UE receives E-AGCH signaling sent by a base station; receives preset network configuration signaling sent by the base station, where the preset network configuration signaling includes first indication information; determines, according to the first indication information, whether to modify a DPCCH power; and if the first indication information instructs to modify the DPCCH power, adjusts an E-DPDCH power and the DPCCH power according to a first power ratio, so that a power ratio of the E-DPDCH and the DPCCH after adjustment satisfies the first power ratio, and a power sum of the E-DPDCH and the DPCCH after adjustment is the same as a power sum of the E-DPDCH and the DPCCH before adjustment; or if the first indication information instructs not to modify the DPCCH power, adjusts an E-DPDCH power according to a first power ratio, so that a power ratio of the E-DPDCH and the DPCCH after adjustment satisfies the first power ratio. In this way, when a network side resends an E-AGCH to change a power ratio of an E-DPDCH and a DPCCH, whether to ensure that an uplink transmit power does not change is determined according to configuration of a network side, which ensures stable RoT of a receive end, ensures an uplink throughput and a coverage index of a communications system, and resolves a prior-art defect that when a network side resends an E-AGCH to change a power ratio of an E-DPDCH and a DPCCH, only an E-DPDCH power is adjusted and an uplink transmit power changes, causing RoT fluctuation of a receive end, and affecting an uplink throughput and a coverage index of a communications system.

**Embodiment 3**

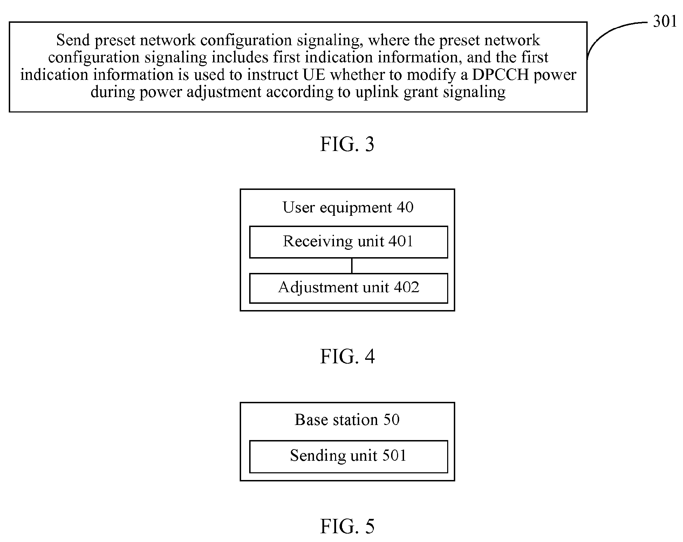

Embodiment 3 of the present invention provides an uplink scheduling method, which is applied to a base station. Referring to FIG. 3, the method may include:

301: Send preset network configuration signaling, where the preset network configuration signaling includes first indication information, and the first indication information is used to instruct UE whether to modify a DPCCH power during power adjustment according to uplink grant signaling.

Optionally, the preset network configuration signaling is higher layer signaling or physical layer signaling.
It should be noted that, a form of the preset network configuration signaling, a form of the first indication information included in preset network signaling, and a correspondence between the first indication information and whether the DPCCH power is to be modified are described in detail in Embodiment 1, which are not described herein again.
In the uplink scheduling method provided in this embodiment of the present invention, preset network configuration signaling is sent, where the preset network configuration signaling includes first indication information, and the first indication information is used to instruct UE whether to modify a DPCCH power during power adjustment according to uplink grant signaling, so that when adjusting a power ratio of an E-DPDCH and a DPCCH according to an E-AGCH, the UE determines, according to the preset network configuration signaling sent by a base station, whether to modify the DPCCH power, to determine whether to ensure that an uplink transmit power does not change, which ensures stable RoT of a receive end, ensures an uplink throughput and a coverage index of a communication system, and resolves a prior-art defect that when UE adjusts a power ratio of an E-DPDCH and a DPCCH according to an E-AGCH, only an E-DPDCH power is adjusted and an uplink transmit power changes, causing RoT fluctuation of a receive end, and affecting an uplink throughput and a coverage index of a communications system.

**Embodiment 4**

Embodiment 3 of the present invention provides user equipment 40. Referring to FIG. 4, the user equipment 40 may include:

a receiving unit 401, configured to receive uplink grant signaling, where the uplink grant signaling includes a first power ratio, and the first power ratio is a power ratio, adapted to a current transport channel, of an E-DPDCH and a DPCCH, where
the uplink grant signaling may include E-AGCH signaling or E-RGCH signaling; and
an adjustment unit 402, configured to adjust an E-DPDCH power and a DPCCH power according to the first power ratio received by the receiving unit 401, so that a power ratio of the E-DPDCH and the DPCCH after adjustment satisfies the first power ratio, and an uplink transmit power after adjustment is the same as an uplink transmit power before adjustment, where the uplink transmit power before adjustment is an uplink transmit power at any time before power adjustment, where
the uplink transmit power may include: a sum of the E-DPDCH power and the DPCCH power, or a sum of the E-DPDCH power, the DPCCH power, an E-DPCCH power, and an HS-DPCCH power.

Further, the receiving unit 401 may be further configured to:

receive preset network configuration signaling sent by a base station, where the preset network configuration signaling includes first indication information, and the first indication information is used to instruct the UE whether to modify the DPCCH power during power adjustment according to the first power ratio.

Optionally, the preset network configuration signaling may be higher layer signaling or physical layer signaling.
Further, the adjustment unit 402 may be specifically configured to:

if the first indication information received by the receiving unit 401 instructs to modify the DPCCH power, execute the adjusting an E-DPDCH power and a DPCCH power according to the first power ratio, so that the power ratio of the E-DPDCH and the DPCCH after adjustment satisfies the first power ratio, and the uplink transmit power after adjustment is the same as the uplink transmit power after adjustment;

or

if the first indication information received by the receiving unit 401 instructs not to modify the DPCCH power, adjust the E-DPDCH power according to the first power ratio, so that the power ratio of the E-DPDCH and the DPCCH after adjustment satisfies the first power ratio.

Further, the adjustment unit 402 may be further configured to:

perform E-TFC selection according to the first power ratio and a preset correspondence, where the preset correspondence includes at least one TBS and a power ratio that is in one-to-one correspondence to the TBS.

Further, the adjustment unit 402 may be further configured to:

perform E-TFC selection according to the first power ratio, difference information notified by the base station, and a preset correspondence, where the preset correspondence includes at least one TBS and a power ratio that is in one-to-one correspondence to the TBS.

The user equipment 40 provided in this embodiment of the present invention receives uplink grant signaling is received, where the uplink grant signaling includes a first power ratio, and the first power ratio is a power ratio, adapted to a current transport channel, of an E-DPDCH and a DPCCH; and adjusts an E-DPDCH power and a DPCCH power according to the first power ratio, so that a power ratio of the E-DPDCH and the DPCCH after adjustment satisfies the first power ratio, and an uplink transmit power after adjustment is the same as an uplink transmit power before adjustment. In this way, when UE adjusts a power ratio of an E-DPDCH and a DPCCH according to an E-AGCH, an uplink transmit power does not change, which ensures stable RoT of a receive end, ensures an uplink throughput and a coverage index of a communications system, and resolves a prior-art defect that when UE adjusts a power ratio of an E-DPDCH and a DPCCH according to an E-AGCH, only an E-DPDCH power is adjusted and an uplink transmit power changes, causing RoT fluctuation of a receive end, and affecting an uplink throughput and a coverage index of a communications system.

**Embodiment 5**

Embodiment 5 of the present invention provides a base station 50. Referring to FIG. 5, the base station 50 may include:

a sending unit 501, configured to send preset network configuration signaling, where the preset network configuration signaling includes first indication information, and the first indication information is used to instruct user equipment UE whether to modify a dedicated physical control channel DPCCH power during power adjustment according to uplink grant signaling.

Optionally, the preset network configuration signaling is higher layer signaling or physical layer signaling.

It should be noted that, a form of the preset network configuration signaling, a form of the first indication information included in preset network signaling, and a correspondence between the first indication information and whether the DPCCH power is to be modified are described in detail in Embodiment 1, which are not described herein again.

The base station 50 provided in this embodiment of the present invention sends preset network configuration signaling, where the preset network configuration signaling includes first indication information, and the first indication information is used to instruct UE whether to modify a DPCCH power during power adjustment according to uplink grant signaling, so that when adjusting a power ratio of an E-DPDCH and a DPCCH according to an E-AGCH, the UE determines, according to the preset network configuration signaling sent by the base station, whether to modify the DPCCH power, to determine whether to ensure that an uplink transmit power does not change, which ensures stable RoT of a receive end, ensures an uplink throughput and a coverage index of a communication system, and resolves a prior-art defect that when UE adjusts a power ratio of an E-DPDCH and a DPCCH according to an E-AGCH, only an E-DPDCH power is adjusted and an uplink transmit power changes, causing RoT fluctuation of a receive end, and affecting an uplink throughput and a coverage index of a communications system.

**Embodiment 6**

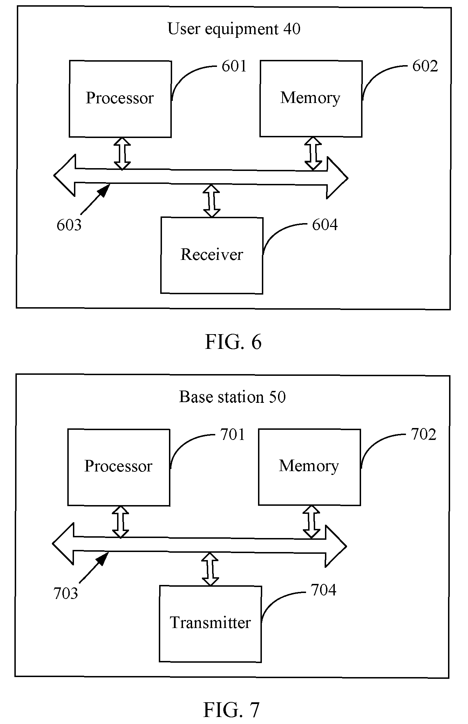

Embodiment 4 of the present invention provides user equipment 40. As shown in FIG. 6, the user equipment 40 may include:

at least one processor 601; a memory 602; at least one communications bus 603, configured to implement connection and mutual communication between the processor 601, the memory 602, and another module that is not shown; and a receiver 604.

The communications bus 603 may be an industry standard architecture (Industry Standard Architecture, ISA for short) bus, a peripheral component interconnect (Peripheral Component, PCI for short) bus, or an extended industry standard architecture (Extended Industry Standard Architecture, EISA for short) bus, or the like. The bus 403 may be classified into an address bus, a data bus, a control bus, and the like. For ease of illustration, the bus in FIG. 6 is represented by using only one bold line, but it does not mean that there is only one bus or one type of bus.

The memory 602 may be a random access memory, and provides an instruction and data to the processor 601. Apart of the memory 602 may further include a non-volatile random access memory (NVRAM). The memory 602 may be configured to store all information included in a distributed lock management device in a distributed lock management process.

The processor 601 may be a central processing unit (Central Processing Unit, CPU for short), or an application specific integrated circuit (Application Specific Integrated Circuit, ASIC for short), or may be configured into one or more integrated circuits for implementing the embodiments of the present invention.

The receiver 604 may be configured to:

receive uplink grant signaling, where the uplink grant signaling includes a first power ratio, the first power ratio is a power ratio, adapted to a current transport channel, of an E-DPDCH and a DPCCH, and the uplink grant signaling may include E-AGCH signaling and E-RGCH signaling.

The processor 601 may be configured to adjust an E-DPDCH power and a DPCCH power according to the first power ratio received by the receiver 604, so that a power ratio of the E-DPDCH and the DPCCH after adjustment satisfies the first power ratio, and an uplink transmit power after adjustment is the same as an uplink transmit power before adjustment, where the uplink transmit power before adjustment is an uplink transmit power at any time before power adjustment.

The uplink transmit power may include: a sum of the E-DPDCH power and the DPCCH power, or a sum of the E-DPDCH power, the DPCCH power, an E-DPCCH power, and an HS-DPCCH power.

Further, the receiver 604 may be further configured to receive preset network configuration signaling sent by a base station, where the preset network configuration signaling includes first indication information, and the first indication information is used to instruct the UE whether to modify the DPCCH power during power adjustment according to the first power ratio.

Optionally, the preset network configuration signaling may be higher layer signaling or physical layer signaling.

Further, the processor 601 may be specifically configured to:

if the first indication information received by the receiver 604 instructs to modify the DPCCH power, execute the adjusting an E-DPDCH power and a DPCCH power according to the first power ratio, so that the power ratio of the E-DPDCH and the DPCCH after adjustment satisfies the first power ratio, and the uplink transmit power after adjustment is the same as the uplink transmit power after adjustment;
or
if the first indication information received by the receiver 604 instructs not to modify the DPCCH power, adjust the E-DPDCH power according to the first power ratio, so that the power ratio of the E-DPDCH and the DPCCH after adjustment satisfies the first power ratio.

Further, the processor 601 may be further configured to:

perform E-TFC selection according to the first power ratio and a preset correspondence, where the preset correspondence includes at least one TBS and a power ratio that is in one-to-one correspondence to the TBS.

Further, the processor 601 may be further configured to:

perform E-TFC selection according to the first power ratio, difference information notified by the base station, and a preset correspondence, where the preset correspondence includes at least one TBS and a power ratio that is in one-to-one correspondence to the TBS.

The user equipment 40 provided in this embodiment of the present invention receives uplink grant signaling, where the uplink grant signaling includes a first power ratio, and the first power ratio is a power ratio, adapted to a current transport channel, of an E-DPDCH and a DPCCH; and adjusts an E-DPDCH power and a DPCCH power according to the first power ratio, so that a power ratio of the E-DPDCH and the DPCCH after adjustment satisfies the first power ratio, and an uplink transmit power after adjustment is the same as an uplink transmit power before adjustment. In this way, when UE adjusts a power ratio of an E-DPDCH and a DPCCH according to an E-AGCH, an uplink transmit power does not change, which ensures stable RoT of a receive end, ensures an uplink throughput and a coverage index of a communications system, and resolves a prior-art defect that when UE adjusts a power ratio of an E-DPDCH and a DPCCH according to an E-AGCH, only an E-DPDCH power is adjusted and an uplink transmit power changes, causing RoT fluctuation of a receive end, and affecting an uplink throughput and a coverage index of a communications system.

**Embodiment 7**

Embodiment 7 of the present invention provides a base station 50. Referring to FIG. 7, the base station 50 may include:

at least one processor 701; a memory 702; at least one communications bus 703, configured to implement connection and mutual communication between the processor 701, the memory 702, and another module that is not shown; and a transmitter 704.

The communications bus 703 may be an industry standard architecture (Industry Standard Architecture, ISA for short) bus, a peripheral component interconnect (Peripheral Component, PCI for short) bus, or an extended industry standard architecture (Extended Industry Standard Architecture, EISA for short) bus, or the like. The bus 703 may be classified into an address bus, a data bus, a control bus, and the like. For ease of illustration, the bus in FIG. 7 is represented by using only one bold line, but it does not mean that there is only one bus or one type of bus.

The memory 702 may be a random access memory, and provides an instruction and data to the processor 701. Apart of the memory 702 may further include a non-volatile random access memory (NVRAM). The memory 702 may be configured to store all information included in a distributed lock management device in a distributed lock management process.

The processor 701 may be a central processing unit (Central Processing Unit, CPU for short), or an application specific integrated circuit (Application Specific Integrated Circuit, ASIC for short), or may be configured into one or more integrated circuits for implementing the embodiments of the present invention.

The transmitter 704 may be configured to send preset network configuration signaling, where the preset network configuration signaling includes first indication information, and the first indication information is used to instruct user equipment UE whether to modify a dedicated physical control channel DPCCH power during power adjustment according to uplink grant signaling.

Optionally, the preset network configuration signaling is higher layer signaling or physical layer signaling.

The base station 50 provided in this embodiment of the present invention sends preset network configuration signaling, where the preset network configuration signaling includes first indication information, and the first indication information is used to instruct UE whether to modify a DPCCH power during power adjustment according to uplink grant signaling, so that when adjusting a power ratio of an E-DPDCH and a DPCCH according to an E-AGCH, the UE determines, according to the preset network configuration signaling sent by the base station, whether to modify the DPCCH power, to determine whether to ensure that an uplink transmit power does not change, which ensures stable RoT of a receive end, ensures an uplink throughput and a coverage index of a communication system, and resolves a prior-art defect that when UE adjusts a power ratio of an E-DPDCH and a DPCCH according to an E-AGCH, only an E-DPDCH power is adjusted and an uplink transmit power changes, causing RoT fluctuation of a receive end, and affecting an uplink throughput and a coverage index of a communications system.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may include alone physically, or two or more units are integrated into one unit. The integrated unit may be implemented in a form of hardware, or may be implemented in a form of a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform a part of the steps of the methods described in the embodiments of the present invention. The foregoing storage medium includes: any medium that can store program code, such as a USB flash drive, a removable hard disk, a read-only memory (Read-Only Memory, ROM, for short), a random access memory (Random Access Memory, RAM, for short), a magnetic disk, or an optical disk, or the like.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

**Claims**

1. An uplink scheduling method, comprising:

   receiving, by user equipment UE, uplink grant signaling, wherein the uplink grant signaling comprises a first power ratio, and the first power ratio is a power ratio, adapted to a current transport channel, of an enhanced dedicated physical data channel E-DPDCH and a dedicated physical control channel DPCCH; and
   adjusting an E-DPDCH power and a DPCCH power according to the first power ratio, so that a power ratio of the E-DPDCH and the DPCCH after adjustment satisfies the first power ratio, and an uplink transmit power after adjustment is the same as an uplink transmit power before adjustment.

2. The uplink scheduling method according to claim 1, wherein the uplink transmit power before adjustment is an uplink transmit power at any time before power adjustment.

3. The uplink scheduling method according to claim 1 or 2, wherein the uplink grant signaling comprises:

   enhanced absolute grant channel E-AGCH signaling or enhanced relative grant channel E-RGCH signaling.

4. The uplink scheduling method according to any one of claims 1 to 3, wherein the uplink transmit power comprises:

   a sum of the E-DPDCH power and the DPCCH power, or
   a sum of the E-DPDCH power, the DPCCH power, and an enhanced dedicated physical control channel E-DPCCH power; or
   a sum of the E-DPDCH power, the DPCCH power, the E-DPCCH power and a high speed dedicated physical control channel HS-DPCCH power.

5. The uplink scheduling method according to any one of claims 1 to 4, wherein before the adjusting an E-DPDCH power and a DPCCH power according to the first power ratio, the method further comprises:

   receiving preset network configuration signaling sent by a base station, wherein the preset network configuration signaling comprises first indication information, and the first indication information is used to instruct the UE whether to modify the DPCCH power during power adjustment according to the first power ratio.

6. The uplink scheduling method according to claim 5, wherein the preset network configuration signaling is higher layer signaling or physical layer signaling.

7. The uplink scheduling method according to claim 5 or 6, wherein if the first indication information instructs to modify the DPCCH power, the adjusting an E-DPDCH power and a DPCCH power according to the first power ratio is executed, so that the power ratio of the E-DPDCH and the DPCCH after adjustment satisfies the first power ratio, and the uplink transmit power after adjustment is the same as the uplink transmit power before adjustment; or
if the first indication information instructs not to modify the DPCCH power, the E-DPDCH power is adjusted according to the first power ratio, so that the power ratio of the E-DPDCH and the DPCCH after adjustment satisfies the first power ratio.

8. The uplink scheduling method according to any one of claims 1 to 7, wherein the method further comprises:

performing enhanced transport format combination E-TFC selection according to the first power ratio and a preset correspondence, wherein the preset correspondence comprises at least one transport block size TBS and a power ratio that is in one-to-one correspondence to the TBS.

9. The uplink scheduling method according to any one of claims 1 to 7, wherein the method further comprises:

performing E-TFC selection according to the first power ratio, difference information notified by the base station, and a preset correspondence, wherein the preset correspondence comprises at least one TBS and a power ratio that is in one-to-one correspondence to the TBS.

10. User equipment, comprising:

a receiving unit, configured to receive uplink grant signaling, wherein the uplink grant signaling comprises a first power ratio, and the first power ratio is a power ratio, adapted to a current transport channel, of an enhanced dedicated physical data channel E-DPDCH and a dedicated physical control channel DPCCH; and
an adjustment unit, configured to adjust an E-DPDCH power and a DPCCH power according to the first power ratio received by the receiving unit, so that a power ratio of the E-DPDCH and the DPCCH after adjustment satisfies the first power ratio, and an uplink transmit power after adjustment is the same as an uplink transmit power before adjustment.

11. The user equipment according to claim 10, wherein the uplink transmit power before adjustment is an uplink transmit power at any time before power adjustment.

12. The user equipment according to claim 10 or 11, wherein the uplink grant signaling comprises:

enhanced absolute grant channel E-AGCH signaling or enhanced relative grant channel E-RGCH signaling.

13. The user equipment according to any one of claims 10 to 12, wherein the uplink transmit power comprises:

a sum of the E-DPDCH power and the DPCCH power, or
a sum of the E-DPDCH power, the DPCCH power, and an enhanced dedicated physical control channel E-DPCCH power; or
a sum of the E-DPDCH power, the DPCCH power, the E-DPCCH power and a high speed dedicated physical control channel HS-DPCCH power.

14. The user equipment according to any one of claims 10 to 13, wherein the receiving unit is further configured to receive preset network configuration signaling sent by a base station, wherein the preset network configuration signaling comprises first indication information, and the first indication information is used to instruct the UE whether to modify the DPCCH power during power adjustment according to the first power ratio.

15. The user equipment according to claim 14, wherein the preset network configuration signaling is higher layer signaling or physical layer signaling.

16. The user equipment according to claim 14 or 15, wherein the adjustment unit is specifically configured to:

if the first indication information received by the receiving unit instructs to modify the DPCCH power, execute the adjusting an E-DPDCH power and a DPCCH power according to the first power ratio, so that the power ratio of the E-DPDCH and the DPCCH after adjustment satisfies the first power ratio, and the uplink transmit power after adjustment is the same as the uplink transmit power before adjustment;
or
if the first indication information received by the receiving unit instructs not to modify the DPCCH power, adjust the E-DPDCH power according to the first power ratio, so that the power ratio of the E-DPDCH and the DPCCH after adjustment satisfies the first power ratio.

17. The user equipment according to any one of claims 10 to 16, wherein the adjustment unit is further configured to:

perform enhanced transport format combination E-TFC selection according to the first power ratio and a preset correspondence, wherein the preset correspondence comprises at least one TBS and a power ratio that is in one-to-one correspondence to the TBS.

18. The user equipment according to any one of claims 10 to 16, wherein the adjustment unit is further configured to:

perform E-TFC selection according to the first power ratio, difference information notified by the base station, and a preset correspondence, wherein the preset correspondence comprises at least one TBS and a power ratio that is in one-to-one correspondence to the TBS.

19. An uplink scheduling method, comprising:

sending preset network configuration signaling, wherein the preset network configuration signaling comprises first indication information, and the first indication information is used to instruct user equipment UE whether to modify a dedicated physical control channel DPCCH power during power adjustment according to uplink grant signaling.

20. The uplink scheduling method according to claim 19, wherein the preset network configuration signaling is higher layer signaling or physical layer signaling.

21. Abase station, comprising:

a sending unit, configured to send preset network configuration signaling, wherein the preset network configuration signaling comprises first indication information, and the first indication information is used to instruct user equipment UE whether to modify a dedicated physical control channel DPCCH power during power adjustment according to uplink grant signaling.

22. The base station according to claim 21, wherein the preset network configuration signaling is higher layer signaling or physical layer signaling.

UE receives uplink grant signaling, where the uplink grant signaling includes a
first power ratio, and the first power ratio is a power ratio, adapted to a current
transport channel, of an E-DPDCH and a DPCCH

— 101

The UE adjusts an E-DPDCH power and a DPCCH power according to the first
power ratio, so that a power ratio of the E-DPDCH and the DPCCH after
adjustment satisfies the first power ratio, and an uplink transmit power after
adjustment is the same as an uplink transmit power before adjustment

— 102

FIG. 1

UE receives E-AGCH signaling sent by a base station, where the E-AGCH signaling includes a first power ratio ⌐201

The UE receives preset network configuration signaling sent by the base station, where the preset network configuration signaling includes first indication information ⌐202

The UE determines, according to the first indication information, whether to modify a DPCCH power ⌐203

Yes      No

The UE adjusts an E-DPDCH power and the DPCCH power according to the first power ratio, so that a power ratio of the E-DPDCH and the DPCCH after adjustment satisfies the first power ratio, and a power sum of the E-DPDCH and the DPCCH after adjustment is the same as a power sum of the E-DPDCH and the DPCCH before adjustment ⌐204

The UE adjusts an E-DPDCH power according to the first power ratio, so that a power ratio of the E-DPDCH and the DPCCH after adjustment satisfies the first power ratio ⌐205

Adjust, according to the first power ratio and a preset correspondence, an actual TBS to a TBS in the preset correspondence and corresponding to the first power ratio ⌐206

The UE transmits data to the base station by using a power and the TBS that are obtained after adjustment ⌐207

FIG. 2

Send preset network configuration signaling, where the preset network configuration signaling includes first indication information, and the first indication information is used to instruct UE whether to modify a DPCCH power during power adjustment according to uplink grant signaling

— 301

FIG. 3

User equipment 40

Receiving unit 401

Adjustment unit 402

FIG. 4

Base station 50

Sending unit 501

FIG. 5

User equipment 40

Processor — 601

Memory — 602

603

Receiver — 604

FIG. 6

Base station 50

Processor — 701

Memory — 702

703

Transmitter — 704

FIG. 7

<div style="text-align:center">

# INTERNATIONAL SEARCH REPORT

</div>

| International application No. |
|---|
| **PCT/CN2013/090372** |

## A. CLASSIFICATION OF SUBJECT MATTER

H04W 52/04 (2009.01) i

According to International Patent Classification (IPC) or to both national classification and IPC

## B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS, CNTXT, VEN, CNKI: dedicated physical control channel, DPCCH, enhanced dedicated physical data channel, E?DPDCH, absolute grant, AGCH, relative grant, RGCH, enhance?, dedicate?, physical, data, control, rate, ratio, proportion, scale, absolute, relative, grant, power, same, equal, invariable, unalter+, unchang+, constant+, chang+, modify

## C. DOCUMENTS CONSIDERED TO BE RELEVANT

| Category* | Citation of document, with indication, where appropriate, of the relevant passages | Relevant to claim No. |
|---|---|---|
| Y | CN 101194438 A (NOKIA CORPORATION), 04 June 2008 (04.06.2008), description, page 2, line 7 to gape 12, line 9, and figures 1-3 | 1-4, 8-13, 17, 18 |
| Y | CN 102668651 A (TELEFONAKTIEBOLAGET L M ERICSSON), 12 September 2012 (12.09.2012), description, paragraphs [0010]-[0109], and figures 1-15 | 1-4, 8-13, 17, 18 |
| A | CN 101237260 A (ZTE CORP.), 06 August 2008 (06.08.2008), the whole document | 1-22 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 September 2014 (23.09.2014) | **28 September 2014 (28.09.2014)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**LIU, Yu'nan**<br><br>Telephone No.: (86-10) **62089380** |

Form PCT/ISA/210 (second sheet) (July 2009)

## INTERNATIONAL SEARCH REPORT

International application No.

**PCT/CN2013/090372**

**Box No. III    Observations where unity of invention is lacking (Continuation of item 3 of first sheet)**

This International Searching Authority found multiple inventions in this international application, as follows:

[1] In the opinion of the present international authority, the claims comprise two inventions as claimed in independent claims (1 and 10), and (19 and 21). The above-mentioned two inventions do not share the same or corresponding technical features, and thus do not have specific technical features embodying the contribution of the invention to the prior art, and are not linked technically, thus do not fall within a single general inventive concept; therefore, the claims do not comply with the requirements of unity of invention and do not meet the requirements of PCT Rule 13.1.

1. ☐   As all required additional search fees were timely paid by the applicant, this international search report covers all searchable claims.

2. ☒   As all searchable claims could be searched without effort justifying additional fees, this Authority did not invite payment of additional fees.

3. ☐   As only some of the required additional search fees were timely paid by the applicant, this international search report covers only those claims for which fees were paid, specifically claims Nos.:

4. ☐   No required additional search fees were timely paid by the applicant. Consequently, this international search report is restricted to the invention first mentioned in the claims; it is covered by claims Nos.:

**Remark on protest**        ☐   The additional search fees were accompanied by the applicant's protest and, where applicable, the payment of a protest fee.

☐   The additional search fees were accompanied by the applicant's protest but the applicable protest fee was not paid within the time limit specified in the invitation.

☐   No protest accompanied the payment of additional search fees.

Form PCT/ISA/210 (continuation of first sheet (2)) (July 2009)

## INTERNATIONAL SEARCH REPORT
### Information on patent family members

International application No.

**PCT/CN2013/090372**

| Patent Documents referred in the Report | Publication Date | Patent Family | Publication Date |
|---|---|---|---|
| CN 101194438 A | 04 June 2008 | KR 100948562 B1 | 18 March 2010 |
| | | US 8005499 B2 | 23 August 2011 |
| | | JP 2011250443 A | 08 December 2011 |
| | | BR PI0610618 A2 | 13 July 2010 |
| | | MX 2007013814 A | 17 April 2008 |
| | | JP 5167388 B2 | 21 March 2013 |
| | | ZA 200710450 A | 31 December 2008 |
| | | WO 2006117663 A2 | 09 November 2006 |
| | | EP 1878131 A2 | 16 January 2008 |
| | | US 2006252450 A1 | 09 November 2006 |
| | | CN 101194438 B | 13 February 2013 |
| | | WO 2006117663 A3 | 04 January 2007 |
| | | EP 1878131 A4 | 01 May 2013 |
| | | KR 20080010451 A | 30 January 2008 |
| | | JP 2008541535 A | 20 November 2008 |
| | | RU 2395915 C2 | 27 July 2010 |
| | | RU 2007144488 A | 10 June 2009 |
| | | WO 2006117663 A8 | 04 October 2007 |
| CN 102668651 A | 12 September 2012 | WO 2011027287 A1 | 10 March 2011 |
| | | JP 5564569 B2 | 30 July 2014 |
| | | US 8401585 B2 | 19 March 2013 |
| | | EP 2474189 A1 | 11 July 2012 |
| | | KR 20120061956 A | 13 June 2012 |
| | | JP 2013504243 A | 04 February 2013 |
| | | US 2011053631 A1 | 03 March 2011 |
| | | TW 201125400 A | 16 July 2011 |
| CN 101237260 A | 06 August 2008 | US 2010002616 A1 | 07 January 2010 |
| | | US 8233419 B2 | 31 July 2012 |
| | | CN 101237260 B | 30 November 2011 |
| | | EP 2120361 A1 | 18 November 2009 |
| | | WO 2008095378 A1 | 14 August 2008 |

Form PCT/ISA/210 (patent family annex) (July 2009)